Europäisches Patentamt

(19) European Patent Office

Office européen des brevets

(11) Veröffentlichungsnummer: **0 259 699**
**B1**

(12) **EUROPÄISCHE PATENTSCHRIFT**

(45) Veröffentlichungstag der Patentschrift:
07.11.90

(21) Anmeldenummer: 87112399.8

(22) Anmeldetag: 26.08.87

(51) Int. Cl.⁵: **G01S 17/10**, G01S 7/48

(54) Optischer Entfernungsmesser.

(30) Priorität: 06.09.86 DE 3630401

(43) Veröffentlichungstag der Anmeldung:
16.03.88 Patentblatt 88/11

(45) Bekanntmachung des Hinweises auf die Patenterteilung:
07.11.90 Patentblatt 90/45

(84) Benannte Vertragsstaaten:
DE FR GB IT SE

(56) Entgegenhaltungen:
EP-A- 0 066 888
FR-A- 1 407 688
FR-A- 2 500 153
US-A- 4 068 952
US-A- 4 121 890
US-A- 4 533 242
US-A- 4 552 454

(73) Patentinhaber: **Messerschmitt-Bölkow-Blohm Gesellschaft mit beschränkter Haftung,
Robert-Koch-Strasse, D-8012 Ottobrunn(DE)**

(72) Erfinder: **Spies, Hans, Schiessstätte 12,
D-8068 Pfaffenhofen(DE)**
Erfinder: **Laucht, Horst, Dr., Hermann-Löw-Weg 16,
D-8206 Bruckmühl(DE)**

## Beschreibung

Die Erfindung bezieht sich auf einen optischen Entfernungsmesser gemäß dem Oberbegriff des Patentanspruchs 1.

Es sind die verschiedensten Entfernungsmesser bekannt, die durch die Ermittlung des Zeitabstandes zwischen einem Sendeimpuls und einem an dem Objekt, dessen Entfernung bestimmt werden soll, reflektierten Impuls den Abstand ermitteln.

Bei den meisten dieser bekannten Entfernungsmesser wird der zeitliche Abstand mittels einer internen Zeitbasis bestimmt. Die Genauigkeit der Entfernungsmessung ist damit von der Genauigkeit der Zeitbasis abhängig. Weiterhin ergeben sich bei der Messung sehr kurzer Zeiten Probleme durch unterschiedliche Verzögerungszeiten in der nachgeschalteten Auswerteeinheit. Weitere Meßungenauigkeiten werden durch die zeitliche Änderung der beteiligten Bauelemente aufgrund von Temperaturschwankungen etc. verursacht.

Deshalb ist in der DE-OS 32 19 423 ein optischer Entfernungsmesser vorgeschlagen worden, bei dem ein Referenz-Lichtweg vorgesehen ist, und zur "Eichung" die Laufzeit über diesen Referenz-Lichtweg bestimmt wird.

Dieser optische Entfernungsmesser, von dem bei der Formulierung des Oberbegriffs des Patentanspruchs 1 ausgegangen wird, hat zwar den Vorteil, daß Temperaturänderungen, Störungen etc. der Auswerteeinheit erkannt werden können, sie hat aber auch weiterhin den Nachteil, daß die Auswerteeinheit mit ihrer internen Zeitbasis vergleichsweise aufwendig aufgebaut sein muß.

Aus der FR-PS 2 500 153 A1 ist ein Laser-Entfernungsmesser bekannt, bei dem als interne Zeitbasis eine elektrische Schaltungsanordnung (29) dient mit einem nicht dargestellten Kondensator. Der Kondensator benötigt eine bestimmte Zeit zum Aufladen und soll in dem Moment entladen werden, in dem der Empfänger den reflektierten Meßimpuls empfängt. Um dies durchführen zu können, muß – nach Erscheinen des Meßsignals – ein Stopsignal für die Zeitmessung erzeugt werden und damit die Aufladung des Kondensators gestoppt werden.

Das Problem hierbei besteht darin, eine exakte zeitliche Zuordnung zwischen dem Empfangszeitpunkt des reflektierten Lichtimpulses (Meßimpuls) und dem Moment zur Erzeugung eines Stopsignals herzustellen.

Zur Lösung des Problems ist eine aufwendige elektrische Schaltung nötig mit einer Reihe von elektrischen Bauelementen und inhärenten Fehlerquellen (wie Alterung, Drift, Offset der Bauelemente), welche es zu vermeiden gilt.

Aus der FR-PS 1 407 688-A1 ist eine Mehrfachreflexionsanordnung zur Kompensation von frequenzmodulierten Impulsen bekannt. Soweit Lichtimpulse angewendet werden sollen (Fig. 7, 8), werden diese an einem Schichtkörper, der formgebend bearbeitet wurde, seitlich ein- und austreten lassen. Zweck der Anordnung ist die Frequenzmodulation der Impulse, wie z.B. der Impulsdauer und der Amplitude.

Der Erfindung liegt die Aufgabe zugrunde, einen nach dem Laufzeitprinzip arbeitenden Entfernungsmesser anzugeben, bei dem auf eine interne Zeitbasis verzichtet werden kann.

Die Lösung der Erfindung ist in Anspruch 1 angegeben. In Unteransprüchen sind Weiterbildungen der Erfindung enthalten.

Bei der erfindungsgemäßen Lösung wird der über die Referenzstrecke zugeführte Teil des Meßlichtstrahls derart mehrfach reflektiert, daß der Empfänger (17) eine Mehrzahl von jeweils um eine Durchlaufzeit durch ein Mehrfach-Reflexionselement gegenüber dem vorherigen Referenzimpuls verzögerten Referenzimpulsen detektiert und ihren gegenseitigen zeitlichen Abstand als interne Zeitbasis verwendet.

Diese durch die Referenzimpulse gebildete Zeitbasis ist frei von allen Einflüssen durch elektrisch und optisch bedingte Signalverzögerungen, da diese auf jedes Signal den gleichen Einfluß haben, so daß sich diese Einflüsse gegenseitig aufheben.

Bei dem erfindungsgemäßen optischen Entfernungsmesser ergibt sich im Vergleich zum Stand der Technik ein wesentlich geringerer Schaltungsaufwand für die Auswerteeinheit, da nicht nur auf die interne Zeitbasis, sondern auch auf alle Maßnahmen verzichtet werden kann, die die Änderung elektrisch bedingter Signalverzögerungen verringern sollen.

Bei der erfindungsgemäßen Lösung wird ein lichtdurchlässiger Stab als Mehrfachreflexionselement angewendet, dessen Eintritts- und Austrittsfläche teilweise verspiegelt ist und aus einem Material mit niedrigem thermischen Ausdehnungskoeffizienten besteht.

Hierdurch werden äußere thermische Einflüsse als eventuelle weitere Fehlerquellen ausgeschlossen.

Die Mehrfachreflexion findet zwischen Eintritts- und Austrittsende des lichtdurchlässigen Stabes – allein bestimmt durch dessen Länge – statt.

Danach wird das mehrfach reflektierte Licht dem Empfänger zugeführt, um daraus die zeitliche Folge von Referenzimpulsen (REF 1 bis REF n) zu gewinnen und diese zu zählen, und daß die Auswerteeinheit die Entfernung des Objekts aus der Lage des am Objekt reflektierten Lichtimpulses zwischen zwei mehrfach reflektierten Referenzimpulsen und anhand deren Ordnungszahl bestimmt.

Gemäß den Ansprüchen 2 bzw. 3 kann die Auswerteeinheit zusätzlich die Amplitude und/oder die Form der mehrfach reflektierten Frequenzimpulse erfassen. Die Amplitude der einzelnen Referenzimpulse muß entsprechend dem Reflexionsfaktor des Mehrfach-Reflexionselements abnehmen. Durch eine entsprechende Amplitudendiskriminierung ist es damit möglich, den am Objekt reflektierten Lichtimpuls auch dann zu "erkennen", wenn er zum gleichen Zeitpunkt wie ein Referenzimpuls am Lichtempfänger auftritt. Selbstverständlich kann aber auch die Impulsbreite und/oder das Amplituden/Zeit-Integral als Kriterium herangezogen werden, mittels dem erkannt wird, ob ein Referenz- und Meßsignal zeitlich zusammenfallen.

Natürlich ist es aber auch möglich, anhand weiter – beispielsweise logischer – Entscheidungskriterien derartige Fälle festzustellen.

In bestimmten Anwendungsfällen kann es ausreichend sein, wenn die Auswerteeinheit die Entfernung zwischen dem Objekt und dem optischen Entfernungsmesser direkt aus den Ordnungsnummern der Referenzimpulse bestimmt, zwischen denen der am Objekt reflektierte Lichtimpuls auftritt. Die Vorteile des erfindungsgemäßen Entfernungsmessers – hohe Meßgenauigkeit bei geringem Schaltungsaufwand – kommen jedoch erst besonders zum Tragen, wenn die Auswerteeinheit zusätzlich den zeitlichen Abstand des am Objekt reflektierten Lichtimpulses von den zeitlich nächsten mehrfach reflektierten Referenzimpulsen durch Interpolation ermittelt. An den Interpolationsvorgang müssen dabei keine hohen Genauigkeitsanforderungen gestellt werden, da der beim Interpolationsvorgang auftretende Fehler sich nur auf "einen Teil der gemessenen Entfernung" bezieht und der "größere Teil der Entfernung" durch die Ordnungsnummer der Referenzimpulse bestimmt wird, zwischen denen der Meßimpuls auftritt.

Der erfindungsgemäße Entfernungsmesser kann für die verschiedensten Entfernungen ausgelegt werden, sofern nur der Meß-Lichtimpuls zwischen zwei Referenzimpulsen auftritt, deren Amplitude so groß ist, daß sie gegenüber dem Rauschen des Lichtempfängers bestimmt werden kann.

Zur Messung größerer Entfernungen kann der erfindungsgemäße optische Entfernungsmesser beispielsweise eine vergleichsweise lange Mehrfach-Reflexionsstrecke aufweisen.

Um den Einfluß von Temperaturänderungen auf die Längenänderung des lichtdurchlässigen Stabs möglichst gering zu halten, ist es von Vorteil, wenn der lichtdurchlässige Stab aus einem speziellen Quarzglas besteht, dessen Ausdehnungskoeffizient in dem Temperaturbereich, in dem der Entfernungsmesser eingesetzt werden soll, möglichst gering ist. Selbstverständlich ist es aber auch möglich, zwei Spiegel zu verwenden, die beispielsweise mittels einer CFK-Struktur (Struktur mit geringem Temperaturausdehnungskoeffizienten) verbunden sind.

Zur Messung kleinerer bis kleinster Entfernungen bis in den mm-Bereich ist es auch möglich, den erfindungsgemäßen Entfernungsmesser beispielsweise als Hybrid- oder als integrierte Schaltung mit integrierten optischen Lichtleitelementen auszubilden.

Die Erfindung wird nachstehend anhand eines Ausführungsbeispiels unter Bezugnahme auf die Zeichnung näher beschrieben, in der zeigen:

Fig. 1 den Prinzipaufbau eines erfindungsgemäßen optischen Entfernungsmessers, und
Fig. 2 schematisch ein Impuls/Zeit-Diagramm.

Der erfindungsgemäße optische Entfernungsmesser weist einen Lichtsender 11 mit einer Sendedicde 12 und einer Sendeoptik 13 auf, die das Licht der Sendediode 12 auf ein nicht dargestelltes Objekt richtet, dessen Entfernung bestimmt werden soll. Im Lichtkegel der Sendediode 12 ist ein Spiegel 14 angeordnet, der einen Teil des Lichts ausblendet und auf einen lichtdurchlässigen Stab 16 umlenkt. Die Eintrittsfläche 161 und die Austrittsfläche 162 des Referenzstabs 16 sind teilweise verspiegelt, so daß das Licht in dem Stab mehrfach reflektiert wird. Das aus dem Referenzstab 16 austretende Licht wird von einem weiteren Spiegel 15 auf einen Lichtempfänger 17 mit einer Licht-Empfangsdiode 18 umgelenkt. Der Lichtempfänger 17 mit der Lichtempfangsdiode 18 empfängt ferner über eine Empfangsoptik 19 das von dem Objekt, dessen Entfernung gemessen werden soll, reflektierte Licht. Das Strahlenbündel zu dem Objekt, dessen Entfernung gemessen werden soll, bzw. das von diesem Objekt kommende Licht ist schematisch mit den Bezugszeichen $20_1$ bzw. $20_2$ bezeichnet.

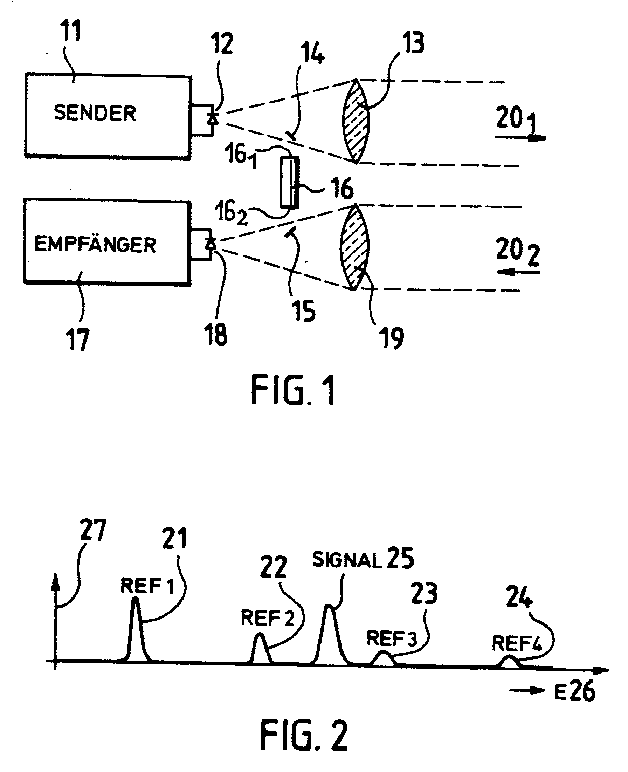

Die Funktionsweise des in Fig. 1 dargestellten optischen Entfernungsmessers soll im folgenden anhand des in Fig. 2 dargestellten Impuls/Zeit-Diagramms erläutert werden. Zum Zeitpunkt t = 0 gibt die Sendediode 12 einen Lichtimpuls 27 ab. Ein Teil dieses Lichtimpulses trifft auf den Spiegel 14 auf, wird von diesem in den Referenzstab 16 umgelenkt und tritt nach ein- oder mehrmaligem Durchlauf des Referenzstabes 16 aus diesem aus und wird vom Spiegel 15 auf den Lichtempfänger 17 umgelenkt. Hierdurch entstehen Referenzimpulse, hier in Form kleiner werdender Amplituden 21, 22, 23, 24 endlicher Anzahl n auf der Achse E26. Der Referenzimpuls 21 wird von dem Licht erzeugt, das den Referenzstab 16 einmal durchlaufen hat, der Referenzimpuls 22 von dem Licht, das den Referenzstab zweimal durchlaufen hat usw. Der zeitliche Abstand zwischen den Referenzimpulsen ist dabei ausschließlich durch die Länge des Referenzstabes 16 und nicht durch elektrische Signalverzögerungen bestimmt, da sich diese gegenseitig aufheben.

Bei dem gezeigten Beispiel tritt zwischen dem Referenzimpuls 22, der den Stab 16 zweimal durchlaufen und dem Referenzimpuls 23, der den Stab 16 dreimal durchlaufen hat, das Meßsignal 25 auf, das von dem am Objekt reflektierten Licht in dem Lichtempfänger 17 erzeugt wird.

Eine nicht dargestellte Auswerteschaltung bestimmt aus der Lage des Meßsignals 25 zwischen zwei Referenzimpulsen sowie aus dem zeitlichen Abstand des Meßsignals 25 von diesen Referenzimpulsen die Entfernung zwischen dem erfindungsgemäßen Entfernungsmesser und dem Objekt, an dem das Licht reflektiert worden ist. Die Genauigkeit der Entfernungsmessung hängt dabei im wesentlichen nur davon ab, wie genau die Länge des Lichtwegs über die Spiegel 14 und 15 sowie den Referenzstab 16 bekannt ist. Fehler, die durch die Interpolation der Lage des Meßsignals zwischen zwei Referenzimpulsen entstehen, gehen nur zum Teil in das Meßergebnis ein, da der "Hauptteil der Entfernung" bereits durch die Ordnungsnummern der Referenzimpulse, zwischen denen das Meßsignal 25 auftritt, festgelegt ist.

Die Auswerteeinheit kann dabei in an sich bekannter Weise aus einem einfachen Zähler, der die Referenzimpulse zählt, sowie einer Interpolationseinheit für die Lage des Meßimpulses zwischen zwei Referenzimpulsen bestehen. Zusätzlich kann eine Amplitudendiskriminierung erfolgen, um auch Fälle erkennen zu können, bei denen das Meßsignal und ein Referenzimpuls zeitlich zusammenfallen.

Der Aufbau der Auswerteschaltung kann dabei aus an sich bekannten Elementen erfolgen, so daß hieraufnicht näher eingegangen werden muß.

Vorstehend ist die Erfindung anhand eines Ausführungsbeispiels ohne Beschränkung des allgemeinen Erfindungsgedankens beschrieben worden.

Innerhalb des allgemeinen Erfindungsgedankens -eine optische Referenzstrecke mit einem Mehrfach-Reflexionselement zu verwenden- sind selbstverständlich die verschiedensten Abwandlungen möglich:

So können der Lichtsender 11 und der Lichtempfänger 17 auch andere Sende- und Empfangselemente, beispielsweise Laser und/oder Fotovervielfacher aufweisen. Auch kann sich der Spektralbereich des Lichts, das vom Sender ausgestrahlt wird, nach den jeweiligen Meßgegebenheiten richten. Beispielsweise kann Infrarotlicht verwendet werden, um das Signal/Rauschverhältnis zu erhöhen.

Der Aufbau und die Größe des erfindungsgemäßen Entfernungsmessers richtet sich dabei nach den zu messenden Objektentfernungen. Bei großen Objektentfernungen kann auch ein "gefaltetes, beispielsweise ein mäanderförmiges" Referenzelement oder eine aufgewickelte Glasfaser als "Lichtweg" zwischen den Spiegelelementen verwendet werden, um den Zeitabstand zwischen zwei Referenzimpulsen zu erhöhen. Andererseits ist es auch möglich, bei kleinen zu messenden Entfernungen den optischen Entfernungsmesser als Hybridschaltung oder als integrierte Schaltung auszuführen, in die optische Lichtleit-Elemente integriert sind.

**Patentansprüche**

1. Optischer Entfernungsmesser mit einem Lichtsender (11), der einen Meßlichtimpuls emittiert, einem Lichtempfänger (17), der das am Objekt reflektierte Licht empfängt, einer optischen Referenzstrecke (14, 15, 16), mit Mehrfach-Reflexion und mit einer elektrischen Auswerteeinheit, dadurch gekennzeichnet, daß der über die Referenzstrecke geführte Teil des Meßlichtstrahls derart mehrfach reflektiert wird, daß der Empfänger (17) eine Mehrzahl von jeweils um eine Durchlaufzeit durch ein Mehrfach-Reflexionselement gegenüber dem vorherigen Referenzimpuls verzögerten Referenzimpulsen detektiert und ihren gegenseitigen zeitlichen Abstand als interne Zeitbasis verwendet, und

daß ein Teil des Lichtes vom Sender (11) auf das Eintrittsende eines lichtdurchlässigen Stabes (16), der als das Mehrfach-Reflexionselement dient, dessen Eintritts- und Austrittsflächen teilweise verspiegelt sind und der aus einem Material mit niedrigem thermischen Ausdehnungskoeffizienten besteht, umgelenkt wird, und diesen nach mehrfacher Reflexion an dessen Austrittsende wieder verläßt, und

danach dieses mehrfach reflektierte Licht dem Empfänger (17) zugeführt wird, um daraus die zeitliche Folge von Referenzimpulsen (REF 1 bis REF n) zu gewinnen und diese zu zählen, und

daß die Auswerteeinheit die Entfernung des Objekts aus der Lage des am Objekt reflektierten Lichtimpulses zwischen zwei mehrfach reflektierten Referenzimpulsen und anhand deren Ordnungszahl bestimmt.

2. Entfernungsmesser nach Anspruch 1, dadurch gekennzeichnet, daß bei Überlagerung eines Referenz- und eines Meßsignals das Meßsignal durch die auftretende Änderung der Amplitude und/oder der Form des Impulses erkannt und ausgewertet wird.

3. Entfernungsmesser nach Anspruch 2, dadurch gekennzeichnet, daß die Auswerteeinheit die Amplitude, Pulsbreite und/oder das Amplituden/Zeit-Integral des am Lichtempfänger auftretenden Ausgangsimpulses erfaßt.

4. Entfernungsmesser nach Anspruch 1, dadurch gekennzeichnet, daß der lichtdurchlässige Stab aus einem Quarzglas mit geringem Ausdehnungskoeffizienten besteht.

5. Entfernungsmesser nach Anspruch 1, dadurch gekennzeichnet, daß der optische Entfernungsmesser als Hybridschaltung oder als integrierte Schaltung mit integrierten stabförmigen Lichtleitelementen aufgebaut ist.

**Claims**

1. An optical rangefinder with a light transmitter (11), which emits a measuring-light pulse, a light receiver (17), which receives the light reflected by the object, an optical line of reference (14, 15, 16) with multiple reflection and with an electrical evaluation unit, characterised in that the portion of the measuring-light beam which is guided along the line of reference is reflected several times in such a manner that the receiver (17) detects a plurality of reference pulses, which are each delayed by a time of passage through a multiplereflection element relative to the earlier reference pulse, and utilises their time gap relative to one another as an internal time base, and

that a portion of the light from the transmitter (11) is deflected towards the input end of a light-permeable rod (16), which serves as a multiple-reflection element, the input and output surfaces of which are partially coated to be reflective, and which consists of a material with a low thermal expansion coefficient, leaving same, after multiple reflection, at its output end, and

thereafter, said multiple reflected light is delivered to the receiver (17) to attain and count the consequential time succession of reference pulses (REF 1 to REF n), and

that the evaluation unit determines the distance of the object by means of the position of the light pulse, reflected by the object between two multiple reflected reference pulses and based on their ordinal number.

2. A rangefinder according to claim 1, characterised in that in the event of superimposure of a reference and a measuring signal, the measuring signal is detected and evaluated by way of the change of amplitude and/or the pulse form which occurs.

3. A rangefinder according to claim 2, characterised in that the evaluation unit registers the amplitude, pulse width and/or the amplitude-time-integral of the output pulse occurring at the light-receiver.

4. A rangefinder according to claim 1, characterised in that the light-permeable rod is composed of a quartz glass with low expansion coefficient.

5. A rangefinder according to claim 1, characterised in that the optical rangefinder is constructed as a hybrid circuit or as an integrated circuit with integrated rod-shaped light-conducting elements.

**Revendications**

1. Télémètre optique avec un émetteur de lumière (11) qui émet une impulsion lumineuse de mesure, un récepteur de lumière (17) qui reçoit la lumière réfléchie sur l'objet, un circuit de référence optique (14, 15, 16) à réflexion multiple, et avec une unité d'évaluation électrique, caractérisé en ce que la partie du rayon lumineux de mesure passant par le circuit de référence est réfléchie plusieurs fois de telle sorte que le récepteur (17) détecte une multiplicité d'impulsions de référence retardées chacune d'un temps de parcours à travers un élément de réflexion multiple par rapport à l'impulsion de référence précédente, et utilise leur écart mutuel dans le temps comme base de temps interne, et en ce qu'une partie de la lumière de l'émetteur (11) est déviée sur l'extrémité d'entrée d'un barreau perméable à la lumière (16) servant d'élément de réflexion multiple, dont les faces d'entrée et de sortie sont partiellement réfléchissantes, et qui est réalisé en un matériau à bas coefficient de dilatation thermique, et quitte ce barreau à son extrémité de sortie après réflexion multiple, et cette lumière plusieurs fois réfléchie est ensuite amenée au récepteur (17), afin d'en déduire la succession dans le temps d'impulsions de référence (REF 1 à REF n), et de les compter, et en ce que l'unité d'évaluation détermine l'éloignement de l'objet à partir de la position de l'impulsion lumineuse réfléchie sur l'objet entre deux impulsions de référence plusieurs fois réfléchies, et à l'aide de leur nombre ordinal.

2. Télémètre selon la revendication 1, caractérisé en ce qu'en cas de superposition d'un signal de référence et d'un signal de mesure, le signal de mesure est décelé et évalué par la modification d'amplitude qui en résulte et/ou de la forme de l'impulsion.

3. Télémètre selon la revendication 2, caractérisé en ce que l'unité d'évaluation détermine l'amplitude, la durée d'impulsion et/ou l'intégrale amplitude/temps de l'impulsion de sortie apparaissant sur le récepteur de lumière.

4. Télémètre selon la revendication 1, caractérisé en ce que le barreau perméable à la lumière est réalisé en verre quartzeux à faible coefficient de dilatation.

5. Télémètre selon la revendication 1, caractérisé en ce que le télémètre optique est réalisé sous la forme d'un circuit hybride ou d'un circuit intégré avec des éléments conducteurs de lumière intégrés en forme de barreaux.

EP 0 259 699 B1

FIG. 1

FIG. 2